# EUROPÄISCHE PATENTSCHRIFT

(11) **EP 1 035 659 B1**
(45) Veröffentlichungstag und Bekanntmachung des Hinweises auf die Patenterteilung: **30.10.2002**
(21) Anmeldenummer: 00104691.1
(22) Anmeldetag: 03.03.2000
(51) Int. Cl.: H04B 1/18, H04B 7/08

(54) **Rundfunkempfangsvorrichtung**
Radio receiver
Récepteur de radiodiffusion

(30) Priorität: 10.03.1999 DE 19910571
(43) Veröffentlichungstag der Anmeldung: 13.09.2000
(73) Patentinhaber: Delphi Technologies, Inc., Troy, MI 48007 (US)
(72) Erfinder: Szydlowski, Zbigniew, 31139 Hildesheim (DE)
(74) Vertreter: Manitz, Finsterwald & Partner GbR

(56) Entgegenhaltungen:
- EP-A- 0 714 178
- EP-A- 0 768 764
- DE-A- 4 204 490
- DE-A- 19 603 514

## Beschreibung

Die Erfindung betrifft eine Rundfunkempfangsvorrichtung mit einem Mehrantennenteil und einem Empfängerteil, bei welcher der Empfängerteil eine Schalteinheit zum Umschalten zwischen Empfang von frequenzmodulierten Rundfunkwellen (FM-Betrieb) und amplitudenmodulierten Rundfunkwellen (AM-Betrieb) sowie wenigstens einen Zwischenfrequenzverstärker aufweist, ein Eingang des Empfängerteils und ein Ausgang des Zwischenfrequenzverstärkers zumindest indirekt über eine Verbindungsleitung mit dem Mehrantennenteil verbunden sind zum Empfang von Rundfunksignalen von dem Mehrantennenteil bzw. zur Übermittlung von verstärkten Zwischenfrequenzsignalen an den Mehrantennenteil, und der Mehrantennenteil eine Auswerteschaltung aufweist zur Auswahl einer Empfangsantenne in Abhängigkeit von den vom Empfängerteil übermittelten Signalen.

Derartige Vorrichtungen werden insbesondere in Automobilen verwendet. Hier wird ein über eine FM-Empfangsantenne empfangenes frequenzmoduliertes Rundfunksignal, insbesondere ein Ultrakurzwellen-Signal, von dem Mehrantennenteil zu dem Empfängerteil übermittelt, dort zu einem Zwischenfrequenzsignal mit einer Trägerfrequenz von beispielsweise 10,7 MHz umgewandelt, als solches in einem FM-Zwischenfrequenzverstärker verstärkt und schließlich zu einem Audiosignal demoduliert.

Es ist möglich, daß am Ort der ausgewählten Empfangsantenne aufgrund von Reflexionen der Rundfunkwellen beispielsweise an Gebäuden Gangunterschiede zwischen den Rundfunkwellen auftreten und es dadurch zu einer unerwünschten Abschwächung des Rundfunksignals kommt. Diese Abschwächung soll durch die Auswerteschaltung des Mehrantennenteils schnell erkannt werden und zur Auswahl einer anderen Empfangsantenne führen, die von der betroffenen Empfangsantenne räumlich beabstandet ist. Hierfür erhält die Auswerteschaltung über die Verbindungsleitung das Ausgangssignal des FM-Zwischenfrequenzverstärkers, und zwar noch bevor dieses demoduliert wird.

Zum Zwecke eines modularen Aufbaus der Vorrichtung ist es üblich, den Mehrantennenteil als separate Einheit möglichst nahe an wenigstens einer der Empfangsantennen anzubringen und lediglich über die als Koaxialkabel ausgebildete Verbindungsleitung mit dem Empfängerteil zu verbinden, welcher in der Konsole des Automobils untergebracht sein kann.

Somit müssen über die Verbindungsleitung von dem Mehrantennenteil zu dem Empfängerteil Radiofrequenzsignale übermittelt werden, während in der Gegenrichtung entsprechende verstärkte Zwischenfrequenzsignale übertragen werden. Außerdem werden in der Gegenrichtung Schaltsignale der Schalteinheit zum Umschalten zwischen AM-Betrieb und FM-Betrieb übertragen. Dieses Schaltsignal kann gegebenenfalls eine Spannungsversorgung für den Mehrantennenteil gewährleisten.

Problematisch ist die gegenseitige Entkopplung dieser über die Verbindungsleitung übermittelten Signale. Insbesondere kann es bei bekannten Vorrichtungen aufgrund der beschriebenen Verbindungswege im AM-Betrieb zu einer unerwünschten Dämpfung des Rundfunksignals kommen, noch bevor dieses als Radiofrequenzsignal die entsprechende AM-Empfangsstufe innerhalb des Empfängerteils erreicht. Dadurch verschlechtert sich - auch bei Verwendung von kapazitiven oder induktiven Entkopplungselementen - die Empfangsqualität auf nachteilige Weise.

EP 0 768 764 A offenbart eine Schaltanordnung zur Steuerung eines Antennendiversitys mit einer Entkopplung in Abhängigkeit von der vorhandenen Antenne mittels eines Prüfsignals.

Es ist eine Aufgabe der Erfindung, eine Rundfunkempfangsvorrichtung mit einem Mehrantennenteil und einem Empfängerteil zu schaffen, bei der über eine Verbindungsleitung zwischen dem Mehrantennenteil und dem Empfängerteil übertragene Signale mit einfachen Mitteln und mit möglichst geringer Signalabschwächung voneinander entkoppelt werden.

Diese Aufgabe wird für eine Rundfunkempfangsvorrichtung der eingangs genannten Art gelöst durch eine Entkopplungseinheit zwischen dem Ausgang des Zwischenfrequenzverstärkers und der Verbindungsleitung, deren Entkopplungswirkung durch Umschalten zwischen AM-Betrieb und FM-Betrieb aktivierbar (Entkopplungszustand) bzw. deaktivierbar (Übertragungszustand) - oder umgekehrt - ist.

Durch diese Entkopplungseinheit kann also ein in lediglich einer ersten Betriebsart verwendeter Zwischenfrequenzverstärker in einer zweiten Betriebsart von der Verbindungsleitung aktiv entkoppelt werden, um dadurch eine Beeinträchtigung des in der zweiten Betriebsart über die Verbindungsleitung übertragenen Rundfunksignals zu unterbinden. Die Aktivierung der Entkopplungswirkung erfolgt auf einfache Weise durch entsprechende Betätigung der Schalteinheit des Empfängerteils, d.h. automatisch mit dem Umschalten des Empfängers zwischen FM-Betrieb und AM-Betrieb. Die Entkopplung ermöglicht zudem eine einfache und flexible Impedanzanpassung zwischen dem Ausgang des Zwischenfrequenzverstärkers und der Verbindungsleitung mittels geläufiger Maßnahmen. Verluste von Radiofrequenz-Rundfunksignalen und Störeinflüsse von Zwischenfrequenzsignalen können also einfach und besonders wirksam vermieden werden.

Bevorzugt wird der Entkopplungszustand der Entkopplungseinheit sowie aller weiteren im Zusammenhang mit der Erfindung genannten Entkopplungseinheiten im AM-Betrieb eingenommen, und der Übertragungszustand wird im FM-Betrieb eingenommen. Mit anderen Worten verhindern die Entkopplungseinheiten gerade beim Empfang von AM-Rundfunksignalen Signaldämpfungen und Störeinflüsse durch lediglich im FM-Betrieb verwendete Einheiten. Es ist alternativ oder zusätzlich möglich, eine Entkopplung von AM-Einheiten im FM-Betrieb vorzusehen.

Vorzugsweise ist die Entkopplungseinheit durch ein oder mehrere Gleichrichtelemente gebildet. Ein solches Gleichrichtelement, beispielsweise eine Halbleiter-Diode, kann unmittelbar durch das Schaltsignal der Schalteinheit in Sperrichtung oder in Durchlaßrichtung vorgespannt werden, um eine Entkopplung zu bewirken bzw. aufzuheben.

Außerdem können weitere, vorzugsweise alle Untereinheiten des Empfängerteils an jenen Ausgängen oder Eingängen, die zumindest zeitweise mit der Verbindungsleitung verbunden sein sollen, eine Entkopplungseinheit der beschriebenen Art aufweisen, um dadurch die Entkopplungseigenschaften der Vorrichtung noch weiter zu verbessern.

Beispielsweise kann in dem Empfängerteil eine Spannungsversorgungseinheit mit einem Versorgungsausgang vorgesehen sein, der für eine zeitweilige Spannungsversorgung des Mehrantennenteils mit der Verbindungsleitung verbunden ist und der durch Umschalten zwischen FM-Betrieb und AM-Betrieb mittels der Schalteinheit aktiviert bzw. deaktiviert werden kann. In diesem Fall kann die Spannungsversorgungseinheit durch ein zwischen den Versorgungsausgang und die Verbindungsleitung geschaltetes zusätzliches Entkopplungselement wahlweise - insbesondere im AM-Betrieb - entkoppelt werden. Wenn dieses zusätzliche Entkopplungselement als Halbleiter-Diode ausgebildet ist, kann die Versorgungsspannung der Spannungsversorgungseinheit in vorteilhafter Weise für die jeweils gewünschte Vorspannung der Halbleiter-Diode verwendet werden.

Ein wahlweise aktivierbarer Versorgungsausgang einer Spannungsversorgungseinheit kann auch zur wahlweisen Aktivierung der Entkopplungswirkung der am Ausgang des Zwischenverstärkers vorgesehenen Entkopplungseinheit sowie zur wahlweisen Spannungsversorgung des Zwischenfrequenzverstärkers verwendet werden.

Der Empfängerteil kann zwischen der am Ausgang des Zwischenfrequenzverstärkers vorgesehenen Entkopplungseinheit und der Verbindungsleitung eine Impedanzanpassungsschaltung aufweisen mit wenigstens einer weiteren Entkopplungseinheit, die automatisch mit dem Umschalten zwischen AM- und FM-Betrieb aktiviert oder deaktiviert wird.

Weitere Ausführungsformen der erfindungsgemäßen Rundfunkempfangsvorrichtung sind in den Unteransprüchen beschrieben. Nachfolgend wird die Erfindung beispielhaft unter Bezugnahme auf die Zeichnungen beschrieben; in diesen zeigen:
- Fig. 1: eine aktivierbare Entkopplungseinheit der erfindungsgemäßen Vorrichtung in einem prinzipiellen Schaltaufbau,
- Fig. 2: den schematischen Grundaufbau der erfindungsgemäßen Rundfunkempfangsvorrichtung, und
- Fig. 3: einen genaueren Schaltaufbau der Rundfunkempfangsvorrichtung.

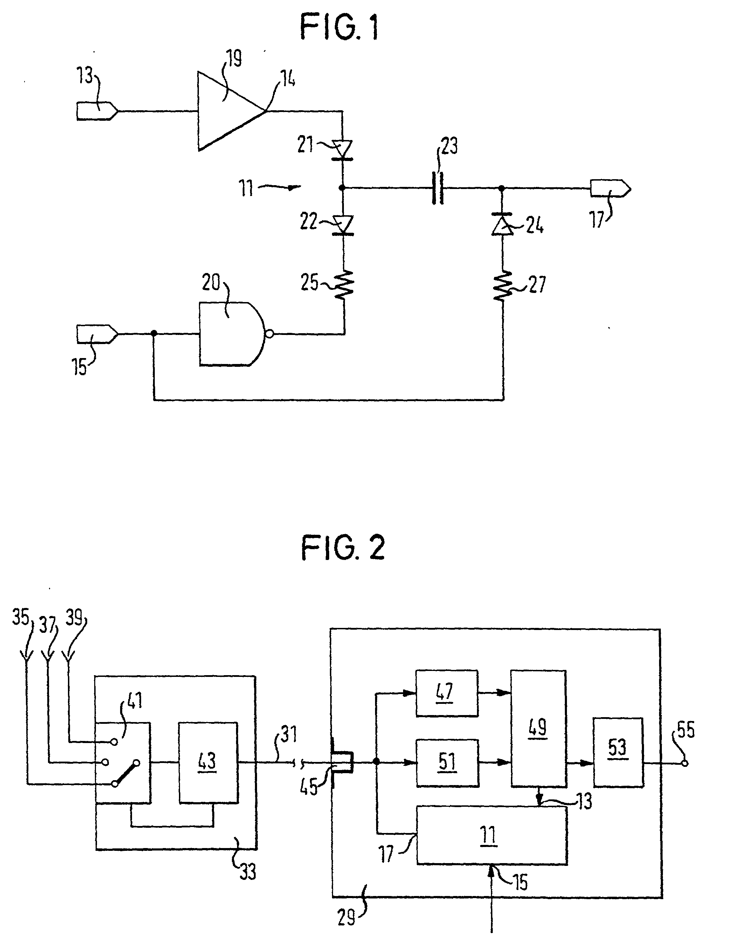

Fig. 1 zeigt einen grundsätzlichen Schaltaufbau einer Entkopplungseinheit 11 innerhalb des Empfängerteils einer erfindungsgemäßen Rundfunkempfangsvorrichtung. Die Entkopplungseinheit 11 besitzt einen Zwischenfrequenzsignaleingang 13, einen Schaltsignaleingang 15 und einen Zwischenfrequenzsignalausgang 17.

Der Zwischenfrequenzsignaleingang 13 ist mit dem Zwischenfrequenzsignalausgang 17 über einen Zwischenfrequenzverstärker 19, über eine Entkopplungsdiode 21, die mit ihrer Anode am Ausgang 14 des Zwischenfrequenzverstärkers 19 anliegt, sowie über einen Koppelkondensator 23 verbunden. Die Kathode der Entkopplungsdiode 21 ist über eine Entkopplungsdiode 22 und einen Vorspannungswiderstand 25 mit dem Ausgang einer Inverterstufe 20 verbunden, welche eingangsseitig an dem Schaltsignaleingang 15 anliegt. Außerdem ist der Schaltsignaleingang 15 über einen Vorspannungswiderstand 27 und eine zusätzliche Entkopplungsdiode 24 mit dem Zwischenfrequenzsignalausgang 17 verbunden.

Die Entkopplungseinheit 11 gemäß Fig. 1 kann innerhalb des Empfängerteils 29 einer Rundfunkempfangsvorrichtung vorgesehen sein, wie sie in Fig. 2 schematisch dargestellt ist. Aus Fig. 2 geht hervor, daß der Empfängerteil 29 über eine als Koaxialkabel ausgebildete Verbindungsleitung 31 mit einem Mehrantennenteil 33 verbunden ist. Dieser weist zwei FM-Empfangsantennen 35, 37 und eine universelle AM-/FM-Empfangsantenne 39 auf, die jeweils über einen Schalter 41 und eine Auswerteschaltung 43 mit der Verbindungsleitung 31 verbunden werden können.

An dem Empfängerteil 29 gemäß Fig. 2 ist zur Verbindung mit der Verbindungsleitung 31 eine Antennenbuchse 45 vorgesehen. Mit dieser sind eine AM-Mischereinheit 47 und eine FM-Mischereinheit 51 verbunden, die zur Umwandlung von über die Verbindungsleitung 31 empfangenen AM- bzw. FM-Rundfunksignalen in entsprechende Zwischenfrequenzsignale dienen.

Die Ausgänge der beiden Mischereinheiten 47, 51 sind an eine gemeinsame Zwischenfrequenzverstärkungsstufe 49 angeschlossen, welche ausgangsseitig zum einen mit einer Demodulations- und Audioeinheit 53 mit einem Audio-Ausgang 55 verbunden ist. Zum anderen ist ein Ausgang der Zwischenfrequenzverstärkungsstufe 49 über die insbesondere gemäß Fig. 1 ausgebildete Entkopplungseinheit 11 mit der Antennenbuchse 45 verbunden.

Weiterhin sind in Fig. 2 an der Entkopplungseinheit 11 die entsprechenden Positionen des Zwischenfrequenzsignaleingangs 13, des Schaltsignaleingangs 15 und des Zwischenfrequenzsignalausgangs 17 gemäß Fig. 1 gezeigt.

Nachfolgend wird die Funktionsweise einer Rundfunkempfangsvorrichtung erläutert, die gemäß Fig. 2 ausgebildet ist und eine Entkopplungseinheit 11 gemäß Fig. 1 besitzt.

Falls an dem Empfängerteil 29 beispielsweise mittels einer Taste der FM-Betrieb - also UKW-Empfang - eingeschaltet ist, kann ein entsprechendes Rundfunksignal an dem Mehrantennenteil 33 über die mittels des Schalters 41 ausgewählte FM-Empfangsantenne 35 aufgenommen und über die Auswerteschaltung 43 sowie die Verbindungsleitung 31 an die Antennenbuchse 45 des Empfängerteils 29 weitergeleitet werden (Fig. 2). Dort wird das einer bestimmten Empfangsfrequenz zugeordnete Rundfunksignal in der FM-Mischereinheit 51 zu einem Zwischenfrequenzsignal umgewandelt, in der Zwischenfrequenzverstärkungsstufe 49 verstärkt und schließlich weiter an den Eingang 13 der Entkopplungseinheit 11 geleitet. Außerdem wird das verstärkte Zwischenfrequenzsignal in der Demodulations- und Audioeinheit 53 in ein am Ausgang 55 anliegendes Audiosignal umgewandelt.

Innerhalb der Entkopplungseinheit 11 erfolgt eine weitere Verstärkung des Zwischenfrequenzsignals in dem Zwischenfrequenzverstärker 19 (Fig. 1) auf bekannte Weise. Erfindungsgemäß sind dem Zwischenfrequenzverstärker 19 die beiden Entkopplungsdioden 21, 22 nachgeschaltet, die in bestimmten Betriebsarten der Rundfunkempfangsvorrichtung den Zwischenverstärker 19 von dem Ausgang 17 bzw. von der Antennenbuchse 45 entkoppeln können. In dem dargestellten Beispiel soll jedoch im FM-Betrieb keine derartige Entkopplung stattfinden. Daher sind im FM-Betrieb eine positive Ausgangsspannung am Ausgang des Zwischenfrequenzverstärkers 19 sowie ein niedriger Pegel am Ausgang der Inverterstufe 20 vorgesehen, so daß die Entkopplungsdioden 21, 22 über den Vorspannungswiderstand 25 in Durchlaßrichtung vorgespannt sind und die FM-Zwischenfrequenzsignale ungehindert über den Zwischenfrequenzverstärker 19, die Entkopplungsdiode 21 und den entsprechend dimensionierten Koppelkondensator 23 zum Zwischenfrequenzsignalausgang 17 gelangen.

Vom Zwischenfrequenzsignalausgang 17 wird das FM-Zwischenfrequenzsignal an die Antennenbuchse 45 des Empfängerteils 29 geführt (Fig. 2) und kann somit über die Verbindungsleitung 31 von der Auswerteschaltung 43 des Mehrantennenteils 33 empfangen werden. Die Auswerteschaltung 43 überprüft und wertet die Qualität des Ausgangssignals der Zwischenfrequenzverstärker 19, 49 und kann bei unzureichender derartiger Qualität den Schalter 41 zu einem Umschalten auf eine andere FM-Empfangsantenne 37, 39 veranlassen. Nach einem solchen Umschalten wird die Qualität des empfangenen Signals auf dieselbe Weise überwacht und ausgewertet.

Bei eingeschaltetem FM-Betrieb wird von einer nicht dargestellten Schalteinheit ferner ein Hochpegel-Schaltsignal über den Schaltsignaleingang 15, die somit durchgeschaltete Entkopplungsdiode 24 (Fig. 1), den Schaltsignalausgang 17 und die Verbindungsleitung 31 (Fig. 2) an den Mehrantennenteil 33 übermittelt, um der Auswerteschaltung 43 den FM-Betrieb anzuzeigen. Dieses FM-Schaltsignal kann gleichzeitig zur Spannungsversorgung des Mehrantennenteils 33 im FM-Betrieb dienen.

Falls dagegen der Benutzer auf AM-Betrieb umschaltet, wird über die Verbindungsleitung 31 ein AM-Schaltsignal an die Auswerteschaltung 43 des Mehrantennenteils 33 übermittelt, so daß der Schalter 41 zum Umschalten auf die AM-/FM-Empfangsantenne 39 veranlaßt wird (Fig. 2). Außerdem wird mit dem Umschalten auf AM-Betrieb die AM-Mischereinheit 47 aktiviert. Somit kann ein AM-Rundfunksignal von der AM-/FM-Empfangsantenne 39 aufgenommen, über die Verbindungsleitung 31 und die Antennenbuchse 45 an die AM-Mischereinheit 47 übermittelt und dort auf bekannte Weise zu einem am Ausgang 55 anliegenden Audiosignal umgewandelt werden.

Um bei diesem Verlauf des AM-Rundfunksignals eine unerwünschte Störung oder Dämpfung desselben über den an der Antennenbuchse 45 anliegenden Zwischenfrequenzverstärker 19 zu vermeiden, ist es im Rahmen der Erfindung vorgesehen, den Zwischenfrequenzverstärker 19 während des AM-Betriebs aktiv zu entkoppeln. Das zur Anzeige des AM-Betriebs von der Schalteinheit an den Eingang 15 der Entkopplungseinheit 11 übermittelte Schaltsignal ist ein Niederpegelsignal, das über die Inverterstufe 20 zu einem Hochpegelsignal umgewandelt wird, so daß die Entkopplungsdioden 21, 22 in Sperrichtung gepolt sind (Fig. 1). Dadurch ist der Ausgang des Zwischenfrequenzverstärkers 19 von dem Zwischenfrequenzsignalausgang 17 und somit von der Antennenbuchse 45 (Fig. 2) wirksam entkoppelt, und eine unerwünschte Beeinträchtigung des über die Antennenbuchse 45 geführten AM-Rundfunksignals wird vermieden.

Außerdem ist die Entkopplungsdiode 24 in Sperrichtung gepolt, so daß auch der Schaltsignaleingang 15 vom Schaltsignalausgang 17 entkoppelt ist. Das am Eingang 15 der Entkopplungseinheit 11 jeweils anliegende Schaltsignal dient somit sowohl zur Aktivierung bzw. Deaktivierung der Entkopplungseinheit 11 als auch zum Umschalten zwischen AM- und FM-Betrieb innerhalb des Mehrantennenteils 33. Wesentlich für die Entkopplung des Zwischenfrequenzverstärkers 19 von der Antennenbuchse 45 ist die Entkopplungsdiode 21, während die Entkopplungsdioden 22, 24 eine diesbezüglich zusätzliche Entkopplung bewirken.

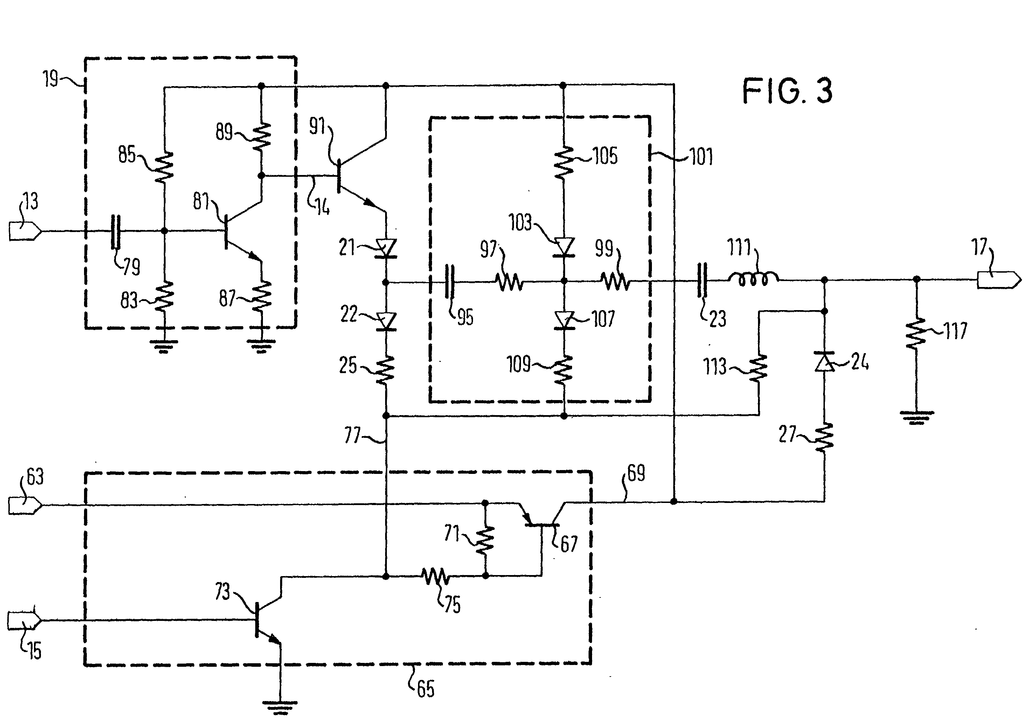

Fig. 3 zeigt einen möglichen Schaltaufbau einer der Entkopplungseinheit 11 gemäß Fig. 1 entsprechenden und gegenüber dieser erweiterten Entkopplungseinheit zur Verwendung in der Rundfunkempfangsvorrichtung gemäß Fig. 2. Gleichartige Elemente wie in den Fig. 1 und 2 sind in Fig. 3 mit denselben Bezugszeichen gekennzeichnet. Insbesondere sind ein mit einem Zwischenfrequenzverstärker 19 verbundener Zwischenfrequenzsignaleingang 13, ein Zwischenfrequenzsignalausgang 17 sowie ein Schaltsignaleingang 15 gezeigt. Außerdem weist die Entkopplungseinheit gemäß Fig. 3 einen Spannungsversorgungseingang 63 auf.

Der Spannungsversorgungseingang 63 und der Schaltsignaleingang 15 sind in eine Umschalteinheit 65 geführt. Dort ist der Spannungsversorgungseingang 63 mit dem Emitter eines PNP-Versorgungstransistors 67 verbunden, dessen Kollektor als ein Versorgungsausgang 69 aus der Umschalteinheit 65 geführt ist. Die Basis und der Emitter des Versorgungstransistors 67 sind über einen Vorspannungswiderstand 71 miteinander verbunden.

Der Schaltsignaleingang 15 ist innerhalb der Umschalteinheit 65 mit der Basis eines NPN-Schalttransistors 73 verbunden, dessen Emitter auf Masse gelegt ist und dessen Kollektor über einen weiteren Vorspannungswiderstand 75 an der Basis des Versorgungstransistors 67 anliegt. Der Kollektor des Schalttransistors 73 ist außerdem als Schaltsignalausgang 77 aus der Umschalteinheit 65 herausgeführt.

Der Zwischenfrequenzsignaleingang 13 ist innerhalb des Zwischenfrequenzverstärkers 19 über einen Koppelkondensator 79 mit der Basis eines NPN-Verstärkungstransistors 81 verbunden. Die Basis des Verstärkungstransistors 81 liegt außerdem über Vorspannungswiderstände 83, 85 an Masse bzw. an dem Versorgungsausgang 69 der Umschalteinheit 65. Emitter und Kollektor des Verstärkungstransistors 81 sind über einen Emitterwiderstand 87 und einen Kollektorwiderstand 89 auf Masse bzw. auf den Versorgungsausgang 69 der Umschalteinheit 65 gelegt.

Das Ausgangssignal des Zwischenfrequenzverstärkers 19 ist von dem Kollektor des Verstärkungstransistors 81 an die Basis eines NPN-Emitter-Folger-Transistors 91 gelegt, dessen Kollektor mit dem Versorgungsausgang 69 der Umschalteinheit 65 verbunden ist.
An den Emitter des Emitter-Folger-Transistors 91 ist eine erfindungsgemäße aktive Entkopplungseinheit angeschlossen, die durch zwei in Durchlaßrichtung in Serie geschaltete Entkopplungsdioden 21, 22 gebildet ist. Die nachgeschaltete Entkopplungsdiode 22 ist über einen Vorspannungswiderstand 25 mit dem Schaltsignalausgang 77 der Umschalteinheit 65 verbunden.

Zwischen den beiden Entkopplungsdioden 21, 22 greifen über einen Koppelkondensator 95 zwei in Serie geschaltete Anpassungswiderstände 97, 99 einer Impedanzanpassungsschaltung 101 an. Zwischen den beiden Anpassungswiderständen 97, 99 liegt die Kathode einer weiteren Entkopplungsdiode 103 an, deren Anode über einen Strombegrenzungswiderstand 105 mit dem Versorgungsausgang 69 der Umschalteinheit 65 verbunden ist. Außerdem liegt zwischen den beiden Anpassungswiderständen 97, 99 die Anode einer weiteren Entkopplungsdiode 107 an, deren Kathode über einen Anpassungswiderstand 109 mit dem Schaltsignalausgang 77 der Umschalteinheit 65 verbunden ist.

An den Anpassungswiderstand 99 sind am Ausgang der Impedanzanpassungsschaltung 101 ein Koppelkondensator 23 und eine Siebfilterspule 111 angeschlossen, die mit dem Zwischenfrequenzsignalausgang 17 der gezeigten Entkopplungseinheit verbunden ist.

Der Versorgungsausgang 69 der Umschalteinheit 65 ist über einen seriellen Versorgungswiderstand 27 und einer in Durchlaßrichtung angeordneten zusätzlichen Entkopplungsdiode 24 mit dem Zwischenfrequenzsignalausgang 17 verbunden. Außerdem ist der Zwischenfrequenzsignalausgang 17 über einen vergleichsweise großen Versorgungswiderstand 113 mit dem Schaltsignalausgang 77 der Umschalteinheit 65 verbunden und über einen vergleichsweise großen Versorgungswiderstand 117 auf Masse gelegt.

In der Entkopplungseinheit gemäß Fig. 3 können außerdem bekannte Signalfilter, insbesondere RC-Glieder, und/oder eine Kurzschlußsicherungsschaltung vorgesehen sein.

Die Entkopplungseinheit gemäß Fig. 3 dient im FM-Betrieb der zugeordneten Rundfunkempfangsvorrichtung zur Verstärkung von am Eingang 13 anliegenden FM-Zwischenfrequenzsignalen und zur Bereitstellung dieser verstärkten Signale am Ausgang 17. Da der Ausgang 17 gleichzeitig an der Antennenbuchse 45 (Fig. 2) anliegt, über welche auch störempfindliche AM-Rundfunksignale geführt werden, ist erfindungsgemäß eine aktive vollständige Entkopplung der gezeigten Entkopplungseinheit vom Ausgang 17 vorgesehen.

Hierfür liegt an dem Spannungsversorgungseingang 63 der Umschalteinheit 65 dauerhaft eine positive Versorgungsspannung an, und am Anschluß 15 der zugeordneten Schalteinheit wird entweder ein positives Schaltsignal (FM-Betrieb) angelegt, oder dieser Schaltanschluß 15 wird auf Masse gelegt (AM-Betrieb). Im FM-Betrieb führt ein positives Schaltsignal am Anschluß 15 zu einem Durchschalten des Schalttransistors 73, so daß zum einen der Schaltsignalausgang 77 der Umschalteinheit 65 näherungsweise auf Masse gelegt wird, und zum anderen der Versorgungstransistor 67 aktiviert wird, wodurch im wesentlichen die positive Versorgungsspannung des Eingangs 63 am Versorgungsausgang 69 anliegt. Diese FM-Betriebsart der Umschalteinheit 65 bewirkt folgendes:
(a) Die positive Betriebsspannung wird dem Zwischenfrequenzverstärker 19 zugeführt, so daß dessen Verstärkungstransistor 81 aktiviert wird und FM-Zwischenfrequenzsignale vom Eingang 13 zu verstärken vermag.
(b) Die beiden Entkopplungsdioden 21, 22 der erfindungsgemäßen Entkopplungseinheit werden in Durchlaßrichtung vorgespannt, so daß ihre Entkopplungswirkung aktiv außer Kraft gesetzt wird und ein verstärktes Zwischenfrequenzsignal ungehindert passieren kann.
(c) Auch die weiteren Entkopplungsdioden 103, 107 der Impedanzanpassungsschaltung 101 werden in Durchlaßrichtung geschaltet, so daß die Impedanzanpassungsschaltung 101 ihre Funktion erfüllen kann.
(d) Außerdem wird die zusätzliche Entkopplungsdiode 24 aufgrund der am Versorgungsausgang 69 anliegenden positiven Betriebsspannung und der Verbindung zu dem Versorgungswiderstand 117 in Durchlaßrichtung geschaltet, so daß die Betriebsspannung am Ausgang 17 der dargestellten Entkopplungseinheit anliegt.

Im Ergebnis kann im FM-Betrieb eine ungehinderte Verstärkung der FM-Zwischenfrequenzsignale innerhalb des Zwischenfrequenzverstärkers 19 erfolgen, und diese verstärkten Signale können über den Emitter-Folger-Transistor 91, die durchgeschaltete Entkopplungsdiode 21, den Koppelkondensator 95, die Anpassungswiderstände 97, 99, den Koppelkondensator 23 und die Siebfilterspule 111 zum Ausgang 17 gelangen. Dabei dient der Emitter-Folger-Transistor 91 auf bekannte Weise zur Impedanzwandlung. Als Resonanzfrequenz des Koppelkondensators 23 und der Siebfilterspule 111 ist die Zwischenfrequenz des verstärkten Signals gewählt, so daß hier eine Siebfilterung erfolgt. Gleichzeitig wird im FM-Betrieb die Versorgungsspannung des Eingangs 63 an den Ausgang 17 gelegt, so daß sie in einem Mehrantennenteil 33 (Fig. 2) zur Spannungsversorgung und als FM-Schaltsignal dienen kann.

Im AM-Betrieb, also bei auf Masse gelegtem Schaltsignaleingang 15, sind der Schalttransistor 73 und der Versorgungstransistor 67 deaktiviert, so daß der Versorgungsausgang 69 auf Masse liegt und am Schaltsignalausgang 77 der Umschalteinheit 65 über die Widerstände 71, 75 die Versorgungsspannung des Eingangs 63 anliegt. Dies führt zu folgendem Ergebnis:
(a) Der Verstärkungstransistor 81 des Zwischenfrequenzverstärkers 19 ist abgeschaltet.
(b) Die beiden Entkopplungsdioden 21, 22 sind'in ihren Entkopplungszustand umgeschaltet, in dem sie in Sperrichtung vorgespannt sind.
(c) Auch die weiteren Entkopplungsdioden 103, 107 der Impedanzanpassungsschaltung 101 sind in Sperrichtung vorgespannt und befinden sich in ihrem Entkopplungszustand.
(d) Die zusätzliche Entkopplungsdiode 24 wird über den Vorspannungswiderstand 113 gesperrt, so daß der Versorgungsausgang 69 der Umschalteinheit 65 vom Zwischenfrequenzsignalausgang 17 entkoppelt ist.

Indem alle Entkopplungsdioden 21, 22, 103, 107, 24 zumindest indirekt über die beiden Ausgänge 69, 77 der Umschalteinheit 65 gespeist sind, und indem die Umschalteinheit 65 in Abhängigkeit von der gewählten Betriebsart ein Umschalten der Polaritäten ermöglicht, können also im AM-Betrieb alle Untereinheiten 19, 63, 65, 91, 101 der in Fig. 3 gezeigten Entkopplungseinheit vom Ausgang 17 und somit von der Antennenbuchse 45 des Empfängerteils 29 (Fig. 2) entkoppelt werden.

Die Erfindung ermöglicht somit die Vermeidung oder Verringerung von Störeinflüssen des FM-Zwischenfrequenzverstärkers 19 auf AM-Rundfunksignale. Gleichzeitig können übliche Maßnahmen der Impendanzanpassung und der Signalfilterung auf einfache und bekannte Weise getroffen werden, da diese Maßnahmen aufgrund der aktiv ansteuerbaren Entkopplungseinheiten 21, 22, 103, 107, 24 keine negativen Einflüsse auf die Charakteristik des AM-Rundfunksignals haben.

### Bezugszeichenliste

- 11: Entkopplungseinheit
- 13: Zwischenfrequenzsignaleingang
- 14: Ausgang des Zwischenfrequenzverstärkers
- 15: Schaltsignaleingang
- 17: Zwischenfrequenzsignalausgang
- 19: Zwischenfrequenzverstärker
- 20: Inverterstufe
- 21: Entkopplungsdiode
- 22: Entkopplungsdiode
- 23: Koppelkondensator
- 24: zusätzliche Entkopplungsdiode
- 25: Vorspannungswiderstand
- 27: Vorspannungswiderstand
- 29: Empfängerteil
- 31: Verbindungsleitung
- 33: Mehrantennenteil
- 35: FM-Empfangsantenne
- 37: FM-Empfangsantenne
- 39: AM-/FM-Empfangsantenne
- 41: Schalter
- 43: Auswerteschaltung
- 45: Antennenbuchse
- 47: AM-Mischereinheit
- 49: Zwischenfrequenzverstärkungsstufe
- 51: FM-Mischereinheit
- 53: Demodulations- und Audioeinheit
- 55: Audio-Ausgang
- 63: Spannungsversorgungseingang
- 65: Umschalteinheit
- 67: Versorgungstransistor
- 69: Versorgungsausgang
- 71: Vorspannungswiderstand
- 73: Schalttransistor
- 75: Vorspannungswiderstand
- 77: Schaltsignalausgang
- 79: Koppelkondensator
- 81: Verstärkungstransistor
- 83: Vorspannungswiderstand
- 85: Vorspannungswiderstand
- 87: Emitterwiderstand
- 89: Kollektorwiderstand
- 91: Emitter-Folger-Transistor
- 95: Koppelkondensator
- 97: Anpassungswiderstand
- 99: Anpassungswiderstand
- 101: Impedanzanpassungsschaltung
- 103: weitere Entkopplungsdiode
- 105: Strombegrenzungswiderstand
- 107: weitere Entkopplungsdiode
- 109: Anpassungswiderstand
- 111: Siebfilterspule
- 113: Versorgungswiderstand
- 117: Versorgungswiderstand

## Patentansprüche

1. Rundfunkempfangsvorrichtung mit einem Mehrantennenteil (33) und einem Empfängerteil (29), bei welcher
- der Empfängerteil (29) eine Schalteinheit zum Umschalten zwischen Empfang von frequenzmodulierten Rundfunkwellen in einem FM-Betrieb und amplitudenmodulierten Rundfunkwellen in einem AM-Betrieb sowie wenigstens einen Zwischenfrequenzverstärker 19, 49) aufweist,
- ein Eingang (45) des Empfängerteils (29) und ein Ausgang (14, 13) des Zwischenfrequenzverstärkers (19, 49) zumindest indirekt über eine Verbindungsleitung (31) mit dem Mehrantennenteil (33) verbunden sind zum Empfang von Rundfunksignalen von dem Mehrantennenteil (33) bzw. zur Übermittlung von verstärkten Zwischenfrequenzsignalen an den Mehrantennenteil (33), und
- der Mehrantennenteil (33) eine Auswerteschaltung (43) aufweist zur Auswahl einer Empfangsantenne (35, 37, 39) in Abhängigkeit von den vom Empfängerteil (29) übermittelten Signalen,
**gekennzeichnet**
**durch** eine Entkopplungseinheit (11) zwischen dem Ausgang (14, 13) des Zwischenfrequenzverstärkers (19, 49) und der Verbindungsleitung (31), deren Entkopplungswirkung automatisch mit dem Einschalten des AM-Betriebs zu einem Entkopplungszustand aktivierbar und mit dem Einschalten des FM-Betriebs zu einem Übertragungszustand deaktivierbar ist.

2. Rundfunkempfangsvorrichtung nach Anspruch 1,
**dadurch gekennzeichnet, daß** die Entkopplungseinheit (11) wenigstens ein Gleichrichtelement, insbesondere eine Halbleiter-Diode (21), aufweist.

3. Rundfunkempfangsvorrichtung nach Anspruch 1,
**dadurch gekennzeichnet, daß** die Entkopplungseinheit (11) zwei gleichsinnig in Serie geschaltete Gleichrichtelemente, insbesondere Halbleiter-Dioden (21, 22), aufweist, wobei vorzugsweise der Ausgang (14, 13) des Zwischenfrequenzverstärkers (19, 49) an einem Ende dieser Serienschaltung anliegt und die Verbindungsleitung (31) zumindest indirekt zwischen den beiden Gleichrichtelementen (21, 22) angreift.

4. Rundfunkempfangsvorrichtung nach Anspruch 2 oder Anspruch 3,
**dadurch gekennzeichnet, daß** das Gleichrichtelement bzw. die Gleichrichtelemente (21, 22, 24, 103, 107) im Entkopplungszustand in Sperrichtung und im Übertragungszustand in Durchlaßrichtung vorgespannt sind.

5. Rundfunkempfangsvorrichtung nach einem der vorhergehenden Ansprüche,
**dadurch gekennzeichnet, daß** seitens des Empfängerteils (29) ein Ausgang (15) der Schalteinheit zumindest indirekt an der Verbindungsleitung (31) anliegt zur Übermittlung von Schaltsignalen an den Mehrantennenteil (33).

6. Rundfunkempfangsvorrichtung nach einem der vorhergehenden Ansprüche,
**dadurch gekennzeichnet, daß** die Entkopplungswirkung der Entkopplungseinheit (11) durch diejenigen Schaltsignale der Schalteinheit aktiviert und deaktiviert wird, welche über die Verbindungsleitung (31) auch an den Mehrantennenteil (33) zum Umschalten zwischen AM- und FM-Betrieb übermittelt werden.

7. Rundfunkempfangsvorrichtung nach einem der vorhergehenden Ansprüche,
**dadurch gekennzeichnet, daß** der Empfängerteil (29) eine Spannungsversorgungseinheit. (63) aufweist mit wenigstens einem Ausgang (69, 77), der durch Umschalten zwischen FM-Betrieb und AM-Betrieb aktivierbar bzw. deaktivierbar - oder umgekehrt - ist.

8. Rundfunkempfangsvorrichtung nach Anspruch 7,
**dadurch gekennzeichnet, daß** die Spannungsversorgungseinheit (63) zwei Ausgänge (69, 77) aufweist, deren Polarität relativ zueinander durch eine Umschalteinheit (65) in Abhängigkeit eines Schaltsignals umschaltbar ist.

9. Rundfunkempfangsvorrichtung nach Anspruch 7 oder Anspruch 8,
**dadurch gekennzeichnet, daß** wenigstens ein Ausgang (69, 77) der Spannungsversorgungseinheit (63) mit dem Zwischenfrequenzverstärker (19) und/oder der Entkopplungseinheit (21, 22, 24, 103, 107) verbunden ist.

10. Rundfunkempfangsvorrichtung nach einem der Ansprüche 7 bis 9,
**dadurch gekennzeichnet, daß** ein Ausgang (69, 77) der Spannungsversorgungseinheit (63) über ein zusätzliches Entkopplungselement - vorzugsweise ein Gleichrichtelement, insbesondere eine Halbleiter-Diode (24) - mit der Verbindungsleitung (31) verbunden ist.

11. Rundfunkempfangsvorrichtung nach Anspruch 10,
**dadurch gekennzeichnet, daß** die Entkopplungswirkung des zusätzlichen Entkopplungselements (24) durch Umschalten zwischen AM-Betrieb und FM-Betrieb aktivierbar bzw. deaktivierbar - oder umgekehrt - ist.

12. Rundfunkempfangsvorrichtung nach einem der vorhergehenden Ansprüche,
**dadurch gekennzeichnet, daß** zwischen dem Ausgang (14) des Zwischenfrequenzverstärkers (19) und der Verbindungsleitung (31) eine Impedanzanpassungsschaltung (101) vorgesehen ist, die eine weitere Entkopplungseinheit (103, 107) aufweist, deren Entkopplungswirkung durch Umschalten zwischen AM-Betrieb und FM-Betrieb aktivierbar bzw. deaktivierbar - oder umgekehrt - ist.

13. Rundfunkempfangsvorrichtung nach Anspruch 12, **dadurch gekennzeichnet, daß** die weitere Entkopplungseinheit ein oder mehrere Gleichrichtelemente, insbesondere Halbleiter-Dioden (103, 107), aufweist.

14. Rundfunkempfangsvorrichtung nach einem der vorhergehenden Ansprüche,
**dadurch gekennzeichnet, daß** an mehreren, insbesondere allen solchen Ausgängen von Untereinheiten (19, 63, 65, 91, 101) des Empfängerteils (29), die zumindest indirekt mit der Verbindungsleitung (31) verbunden sind, eine Entkopplungseinheit (21, 22, 24, 103, 107) vorgesehen ist, deren Entkopplungswirkung durch Umschalten zwischen AM-Betrieb und FM-Betrieb aktivierbar bzw. deaktivierbar - oder umgekehrt - ist.

15. Rundfunkempfangsvorrichtung nach einem der vorhergehenden Ansprüche,
**dadurch gekennzeichnet, daß** die Schalteinheit mit der zwischen dem Ausgang (14) des Zwischenfrequenzverstärkers (19) und der Verbindungsleitung (31) vorgesehenen Entkopplungseinheit (11), mit der Impedanzanpassungsschaltung (101), mit der Verbindungsleitung (31) und/oder mit dem Zwischenfrequenzverstärker (19) verbunden ist.

16. Rundfunkempfangsvorrichtung nach einem der vorhergehenden Ansprüche,
**gekennzeichnet durch** einen Schalttransistor (67, 73) mit einem Ausgang, der **durch** Umschalten der Rundfunkempfangsvorrichtung zwischen FM-Betrieb und AM-Betrieb im wesentlichen auf ein Masse-Potential bzw. auf das Potential einer Spannungsversorgungseinheit (63) - oder umgekehrt - bringbar ist.

17. Rundfunkempfangsvorrichtung nach einem der vorhergehenden Ansprüche,
**dadurch gekennzeichnet, daß** zwischen dem Ausgang (14) des Zwischenfrequenzverstärkers (19) und der Verbindungsleitung (31) eine Bandpaßschaltung vorgesehen ist, deren Durchlaßfrequenz im Bereich der Zwischenfrequenz der Zwischenfrequenzsignale liegt und die vorzugsweise wenigstens eine Induktivität (111) und einen hierzu in Serie geschalteten Kondensator (23) aufweist.

## Claims

1. Radio receiving apparatus with a multiple-aerial portion (33) and a receiver portion (29), in which
- the receiver portion (29) comprises a switching unit for switching between reception of frequency-modulated radio waves in FM operation and amplitude-modulated radio waves in AM operation as well as at least one intermediate-frequency amplifier (19, 49),
- an input (45) of the receiver portion (29) and an output (14, 13) of the intermediate-frequency amplifier (19, 49) are at least indirectly connected by a connecting wire (31) to the multiple-aerial portion (33) for the reception of radio signals from the multiple-aerial portion (33) or for the transmission of amplified intermediate-frequency signals to the multiple-aerial portion (33), and
- the multiple-aerial portion (33) comprises an evaluating circuit (43) for the selection of a receiving aerial (35, 37, 39) as a function of the signals transmitted from the receiver portion (29),
**characterised**
**by** a decoupling unit (11) between the output (14, 13) of the intermediate-frequency amplifier (19, 49) and the connecting wire (31), whose decoupling effect can be automatically activated into a decoupling state on switching on AM operation or deactivated into a transmission state on switching on FM operation.

2. Radio receiving apparatus according to claim 1, **characterised in that** the decoupling unit (11) comprises at least one rectifying element, in particular a semiconductor diode (21).

3. Radio receiving apparatus according to claim 1, **characterised in that** the decoupling unit (11) comprises two rectifying elements connected in series in the same direction, in particular semiconductor diodes (21, 22), wherein preferably the output (14, 13) of the intermediate-frequency amplifier (19, 49) is connected to one end of this series circuit and the connecting wire (31) is connected at least indirectly between the two rectifying elements (21, 22).

4. Radio receiving apparatus according to claim 2 or claim 3, **characterised in that** the rectifying element or rectifying elements (21, 22, 24, 103, 107) are biased in the non-conducting direction in the decoupling state and in the conducting direction in the transmission state.

5. Radio receiving apparatus according to any of the preceding claims, **characterised in that** on the side of the receiver portion (29) an output (15) of the switching unit is connected at least indirectly to the connecting wire (31) for the transmission of switching signals to the multiple-aerial portion (33).

6. Radio receiving apparatus according to any of the preceding claims, **characterised in that** the decoupling effect of the decoupling unit (11) is activated and deactivated by those switching signals of the switching unit which are also transmitted to the multiple-aerial portion (33) via the connecting wire (31) for switching between AM and FM operation.

7. Radio receiving apparatus according to any of the preceding claims, **characterised in that** the receiver portion (29) comprises a voltage supply unit (63) with at least one output (69, 77) which can be activated or deactivated by switching between FM operation and AM operation, or vice versa.

8. Radio receiving apparatus according to claim 7, **characterised in that** the voltage supply unit (63) comprises two outputs (69, 77) whose polarity relative to each other can be switched by a switching unit (65) as a function of a switching signal.

9. Radio receiving apparatus according to claim 7 or claim 8, **characterised in that** at least one output (69, 77) of the voltage supply unit (63) is connected to the intermediate-frequency amplifier (19) and/or the decoupling unit (21, 22, 24, 103, 107).

10. Radio receiving apparatus according to any of claims 7 to 9, **characterised in that** an output (69, 77) of the voltage supply unit (63) is connected to the connecting wire (31) via an additional decoupling element, preferably a rectifying element, in particular a semiconductor diode (24).

11. Radio receiving apparatus according to claim 10, **characterised in that** the decoupling effect of the additional decoupling unit (24) can be activated or deactivated by switching between AM operation and FM operation, or vice versa.

12. Radio receiving apparatus according to any of the preceding claims, **characterised in that** between the output (14) of the intermediate-frequency amplifier (19) and the connecting wire (31) is provided an impedance matching circuit (101) comprising a further decoupling unit (103, 107) whose decoupling effect can be activated or deactivated by switching between AM operation and FM operation, or vice versa.

13. Radio receiving apparatus according to claim 12, **characterised in that** the further decoupling unit comprises one or more rectifying elements, in particular semiconductor diodes (103, 107).

14. Radio receiving apparatus according to any of the preceding claims, **characterised in that** at several, in particular all those outputs of subunits (19, 63, 65, 91, 101) of the receiver portion (29) which are connected at least indirectly to the connecting wire (31), is provided a decoupling unit (21, 22, 24, 103, 107) whose decoupling effect can be activated or deactivated by switching between AM operation and FM operation, or vice versa.

15. Radio receiving apparatus according to any of the preceding claims, **characterised in that** the switching unit is connected to the decoupling unit (11) provided between the output (14) of the intermediate-frequency amplifier (19) and the connecting wire (31), to the impedance matching circuit (101), to the connecting wire (31) and/or to the intermediate-frequency amplifier (19).

16. Radio receiving apparatus according to any of the preceding claims, **characterised by** a switching transistor (67, 73) with an output which, by switching the radio receiving apparatus between FM operation and AM operation, can essentially be brought to earth potential or to the potential of a voltage supply unit (63), or vice versa.

17. Radio receiving apparatus according to any of the preceding claims, **characterised in that** between the output (14) of the intermediate-frequency amplifier (19) and the connecting wire (31) is provided a band-pass circuit whose conducting frequency is in the region of the intermediate frequency of the intermediate-frequency signals and which preferably comprises at least one inductance (111) and a capacitor (23) connected in series therewith.

## Revendications

1. Récepteur de radiodiffusion comprenant une partie à antennes multiples (33) et une partie réceptrice (29), dans lequel
■ la partie réceptrice (29) présente une unité de commutation pour commuter entre une réception d'ondes radio à modulation de fréquence en mode de fonctionnement FM et une réception d'ondes radio à modulation d'amplitude en mode de fonctionnement AM, ainsi qu'au moins un amplificateur de fréquences intermédiaires (19, 49),
■ une entrée (45) de la partie réceptrice (29) et une sortie (14, 13) de l'amplificateur de fréquences intermédiaires (19, 49) sont connectées, au moins indirectement via une ligne de connexion (31), à la partie à antennes multiples (33) pour recevoir des signaux radio de la partie à antennes multiples (33) ou transférer des signaux de fréquences intermédiaires amplifiés à la partie à antennes multiples (33), et
■ la partie à antennes multiples (33) présente un circuit d'exploitation (43) pour choisir une antenne réceptrice (35, 37, 39) en fonction des signaux transférés par la partie réceptrice (29),
**caractérisé par** une unité de découplage (11) entre la sortie (14, 13) de l'amplificateur de fréquences intermédiaires (19, 49) et la ligne de connexion (31), dont l'effet de découplage peut être activé automatiquement par enclenchement du mode de fonctionnement AM en état de découplage et peut être désactivé automatiquement par enclenchement du mode de fonctionnement FM en état de transfert.

2. Récepteur de radiodiffusion selon la revendication 1, **caractérisé en ce que** l'unité de découplage (11) présente au moins un élément redresseur, en particulier une diode à semi-conducteurs (21).

3. Récepteur de radiodiffusion selon la revendication 1, **caractérisé en ce que** l'unité de découplage (11) présente deux éléments redresseurs commutés en série dans le même sens, en particulier des diodes à semi-conducteurs (21, 22), de préférence la sortie (14, 13) de l'amplificateur de fréquences intermédiaires (19, 49) étant appliquée à une extrémité de ce circuit en série et la ligne de connexion (31) s'engageant au moins directement entre les deux éléments redresseurs (21, 22).

4. Récepteur de radiodiffusion selon la revendication 2 ou 3, **caractérisé en ce que** le ou les éléments redresseurs (21, 22, 24, 103, 107) sont soumis à une tension préalable à l'état de découplage dans le sens bloquant et à l'état de transfert dans le sens passant.

5. Récepteur de radiodiffusion selon l'une quelconque des revendications précédentes, **caractérisé en ce que**, côté de la partie réceptrice (29), une sortie (15) de l'unité de commutation s'applique au moins indirectement sur la ligne de connexion (31) pour transférer des signaux de commutation à la partie à antennes multiples (33).

6. Récepteur de radiodiffusion selon l'une quelconque des revendications précédentes, **caractérisé en ce que** l'effet de découplage de l'unité de découplage (11) est activé et désactivé par les signaux de commutation de l'unité de commutation qui sont transférés via la ligne de connexion (31) également à la partie à antennes multiples (33) pour commuter entre la mode de fonctionnement AM et le mode de fonctionnement FM.

7. Récepteur de radiodiffusion selon l'une quelconque des revendications précédentes, **caractérisé en ce que** la partie réceptrice (29) présente une unité d'alimentation en tension (63) avec au moins une sortie (69, 77), qui peut être activée ou désactivée - ou vice-versa - par commutation entre le mode de fonctionnement FM et le mode de fonctionnement AM.

8. Récepteur de radiodiffusion selon la revendication 7, **caractérisé en ce que** l'unité d'alimentation en tension (63) présente deux sorties (69, 77) dont la polarité peut être commutée l'une par rapport à l'autre au moyen d'une unité de commutation (65) en fonction d'un signal de commutation.

9. Récepteur de radiodiffusion selon la revendication 7 ou 8, **caractérisé en ce qu'**au moins une sortie (69, 77) de l'unité d'alimentation en tension (63) est connectée à l'amplificateur de fréquences intermédiaires (19) et/ou à l'unité de découplage (21, 22, 24, 103, 107).

10. Récepteur de radiodiffusion selon l'une quelconque des revendications 7 à 9, **caractérisé en ce qu'**une sortie (69, 77) de l'unité d'alimentation en tension (63) est connectée à la ligne de connexion (31) via un élément de découplage supplémentaire - de préférence un élément redresseur, en particulier une diode à semi-conducteurs (24).

11. Récepteur de radiodiffusion selon la revendication 10, **caractérisé en ce que** l'effet de découplage de l'élément de découplage supplémentaire (24) peut être activé ou désactivé - ou vice-versa - par commutation entre le mode de fonctionnement AM et le mode de fonctionnement FM.

12. Récepteur de radiodiffusion selon l'une quelconque des revendications précédentes, **caractérisé en ce qu'**il est prévu entre la sortie (14) de l'amplificateur de fréquences intermédiaires (19) et la ligne de connexion (31) un circuit d'adaptation d'impédance (101) qui présente une autre unité de découplage (103, 107) dont l'effet de découplage peut être activé ou désactivé - ou vice-versa - par commutation entre le mode de fonctionnement AM et le mode de fonctionnement FM.

13. Récepteur de radiodiffusion selon la revendication 12, **caractérisé en ce que** l'autre unité de découplage présente un ou plusieurs éléments redresseurs, en particulier des diodes à semi-conducteurs (103, 107).

14. Récepteur de radiodiffusion selon l'une quelconque des revendications précédentes, **caractérisé en ce qu'**il est prévu, sur plusieurs sorties, en particulier sur toutes ces sorties de sous-unités (19, 63, 65, 91, 101) de la partie réceptrice (29), qui sont connectées au moins indirectement à la ligne de connexion (31), une unité de découplage (21, 22, 24, 103, 107), dont l'effet de découplage peut être activé ou désactivé - ou vice-versa - par commutation entre le mode de fonctionnement AM et le mode de fonctionnement FM.

15. Récepteur de radiodiffusion selon l'une quelconque des revendications précédentes, **caractérisé en ce que** l'unité de commutation est connectée à l'unité de découplage (11) prévue entre la sortie (14) de l'amplificateur de fréquences intermédiaires (19) et la ligne de connexion (31), au circuit d'adaptation d'impédance (101), à la ligne de connexion (31) et/ou à l'amplificateur de fréquences intermédiaires (19).

16. Récepteur de radiodiffusion selon l'une quelconque des revendications précédentes, **caractérisé par** un transistor de commutation (67, 73) comprenant une sortie qui, par commutation du récepteur de radiodiffusion entre le mode de fonctionnement FM et le mode de fonctionnement AM, peut être sensiblement amenée à un potentiel de masse ou au potentiel d'une unité d'alimentation en tension (63) - ou vice-versa.

17. Récepteur de radiodiffusion selon l'une quelconque des revendications précédentes, **caractérisé en ce qu'**il est prévu entre la sortie (14) de l'amplificateur de fréquences intermédiaires (19) et la ligne de connexion (31) un circuit passe-bande dont la fréquence passante se situe dans la plage de la fréquence intermédiaire des signaux de fréquences intermédiaires et qui présente de préférence au moins une inductance (111) et un condensateur (23) connecté en série à celle-ci.
